# EUROPEAN PATENT APPLICATION

(11) **EP 2 466 455 A1**
(43) Date of publication of application: **20.06.2012**
(21) Application number: 10195061.6
(22) Date of filing: 15.12.2010
(51) Int. Cl.: G06F 9/44

(54) **Definition of objects in object-oriented programming environments**

(71) Applicant: Schneider Electric Buildings AB, 213 75 Malmö (SE)
(72) Inventor: Grundelius, Mattias, 226 47, LUND (SE); Kennedy, Magnus, 275 96, SÖVDE (SE)
(74) Representative: Milanov, Nina Vendela Maria

(57) **Abstract**

In an object-oriented programming environment having a hierarchical object structure an object type is defined by declaring different types of objects and properties associated therewith. A base type is declared. Properties for the base type are declared. A set of aggregated objects comprising individual objects of different types is declared. The set of aggregated objects is to be instantiated in a master object created from the object type. A set of auxiliary objects comprising individual objects of different types and associated with the object type is declared. The individual objects of the set of auxiliary objects are to be instantiated in respective locations in the hierarchical object structure.

## Description

### Technical Field

The present invention relates to an object-oriented programming environment in general, and in particular to means for defining an object type in an object-oriented programming environment having a hierarchical object structure.

### Background

In computer based control of building automation systems several object-oriented tools and concepts have lately been introduced. Such object-oriented tools and concepts may allow engineers to be more efficient in the engineering of a site of the building automation system.

User-defined types, aggregates, inheritance etc. are all concepts that are well proven from the world of object-oriented programming. It is therefore common to define aggregate objects in object-oriented environments. Aggregate objects are built from one or more part objects.

In a specific building automation system there are typically constraints and restrictions regarding what the engineer is allowed to do (and hence also what the engineer is not allowed to do) in the engineering environment. For example, there may in the provided object-oriented tools and concepts be certain rules regarding where different objects can be located. At the same time, it may be desirable by the engineer to, by using the provided object-oriented tools and concepts, create engineering solutions comprising complex objects. This may impose limitations on the usability of aggregate objects in the object-oriented tools and concepts.

The engineering environment is directly related to the underlying object-oriented environment. Thus, the principle of using aggregate objects could be a way to package engineering solutions and possibly to instantiate many engineering solutions and/or aggregates in an installation. Similar to an aggregate, it may be desired by engineers to modify application objects in the engineering environment. Such modification may also be in conflict with the rules of the provided engineering environment.

Hence there is a trade-off between the desire to keep the object-oriented tools and concepts robust and simple in the provided engineering environment and the desire of the engineer using the engineering environment to be able to create complex structures and objects therein.

US 5,960,438 discloses a hierarchical class library to be provided to permit object-oriented applications to instantiate objects to access and to manipulate, in accordance with the object model, non-traditional data values of a relational table. The data is manipulable by virtue of extended data objects that each represent a cell of a relational row, and that each inherit type-specific behaviours from the class library. A class library program product is provided whereby the entity object is extended to hold extended data objects (EXOB's). For each column of a non-traditional datatype, one EXOB is constructed from an appropriate class of the class library. The class library program product may be referred to as an EXOB class library. In particular, when an application accesses a cell of a relational table, and the cell contains a non-traditional datatype, an EXOB class instance of a matching type is instantiated in the application to represent that data. The EXOB instance will provide a public interface for adding, retrieving, updating, and deleting its data to and from the corresponding table location; for accessing the object's attributes; and for manipulating the data in various type-dependent ways.

However, although US 5,960,438 allows access to and manipulation of non- traditional type data values from relational tables it may still be difficult to balance the resulting object-oriented applications between a robust and simple engineering environment and the flexibility of the same as desire by the engineer using the engineering environment.

### Summary of the Invention

In view of the foregoing, it is thus an object of the present invention to provide an improvement of the prior art, thereby solving or at least mitigating the above mentioned issues. More particularly, it is an object to provide means for a user to create engineering solutions comprising complex objects whilst maintaining robust and simple object-oriented tools and concepts. This and further objects may be accomplished by means for defining an object type in an object oriented programming environment having a hierarchical object structure.

Hence, according to a first aspect there is provided a method for defining an object type in an object oriented programming environment having a hierarchical object structure, the method comprising: declaring a base type for the object type; declaring properties for the object type; declaring a set of aggregated objects comprising individual objects of different types associated with the object type, wherein the set of aggregated objects is to be instantiated in a master object created from the object type; and declaring a set of auxiliary objects comprising individual objects of different types and associated with the object type, wherein the individual objects of the set of auxiliary objects are to be instantiated in respective locations in the hierarchical object structure.

Such a method advantageously allows a user to truly create and reuse solutions within object-oriented tools and concepts, with or without an engineering tool. This may enable more efficient use of the object-oriented tools and concepts.

According to embodiments the method further comprises: instantiating the object type. Thereby the master object is created in a first location in the hierarchical object structure. In response to the instantiating the set of aggregated objects may be created inside the master object; the set of auxiliary objects may be created; and the individual objects of the set of auxiliary objects may be saved in the respective locations.

According to embodiments the method further comprises: specifying, based on the object type, properties of the auxiliary objects; and determining, based on the object type, which of the properties of the auxiliary objects that are user modifiable and which of the properties of the auxiliary objects that are not user modifiable.

According to a second aspect there is provided a tool in an object-oriented programming environment having a hierarchical object structure for defining an object type therein, comprising circuitry configured to implement a method according to the below. The tool may comprise means for declaring a base type for the object type; means for declaring properties for the object type; means for declaring a set of aggregated objects comprising individual objects of different types associated with the object type, wherein the set of aggregated objects is to be instantiated in a master object created from the object type; and means for declaring a set of auxiliary objects comprising individual objects of different types and associated with the object type, wherein the individual objects of the set of auxiliary objects are to be instantiated in respective locations in the hierarchical object structure.

According to a third aspect of the invention, there is provided a computer program product stored on a non-transitory computer-readable medium, which comprises software instructions that, when executed in a computer, performs a method for defining an object type in an object oriented programming environment having a hierarchical object structure as disclosed above. Such a computer program enables for efficient implementation of the method as disclosed above.

The second and third aspects may generally have the same features and advantages as the first aspect.

Generally, all terms used in the claims are to be interpreted according to their ordinary meaning in the technical field, unless explicitly defined otherwise herein. All references to "a/an/the [device, event, message, alarm, parameter, step etc.]" are to be interpreted openly as referring to at least one instance of said device, event, message, alarm, parameter, step etc., unless explicitly stated otherwise. The steps of any method disclosed herein do not have to be performed in the exact order disclosed, unless explicitly stated.

### Brief Description of the Drawings

Embodiments of the present invention will now be described, by way of example, with reference to the accompanying schematic drawings, in which
Fig. 1 is a schematic illustration of a tool according to an embodiment;
Figs. 2(a)-(b) are schematic illustrations of object structures in object-oriented environments; and
Fig. 3 is a flowchart according to an embodiment.

### Detailed Description of Preferred Embodiments

Many building automation system of today are computer controlled. Technicians may use computers running specific building automation system software to monitor and supervise the building automation system. The specific building automation system software is typically provided by a developer. The specific building automation system software may be part of an engineering tool, such as a software suite. Some parts of the specific building automation system software may be configurable by engineers of the building automation system in which the specific building automation system software is installed. The engineers may thereby, in an engineering environment, further customize the functionality and operation of the provided software to their particular needs.

As noted in US 5,960,438, computer applications programmers develop computer based applications to fulfil end user needs. The advance of technology has made it possible to develop applications of great complexity. One of the aspects of fulfilling end user needs (i.e. the engineers of the building automation system) is the correct representation of complex real world systems. One example of such a complex real world system is a computer-controlled building automation system.

By using the below disclosed subject matter a user may be able to create engineering solutions comprising complex objects whilst maintaining robust and simple object-oriented tools and concepts. This is accomplished by means for defining an object type in an object oriented programming environment having a hierarchical object structure. According to the object model, a software system is modelled as collections of cooperating objects. Individual objects are treated as instances of a particular class. Each class has a place within a hierarchy of classes. An object is understood to have a unique identity, to have a state, and to exhibit behaviour. The behaviour of an object relates to the set of operations that may be performed by the object.

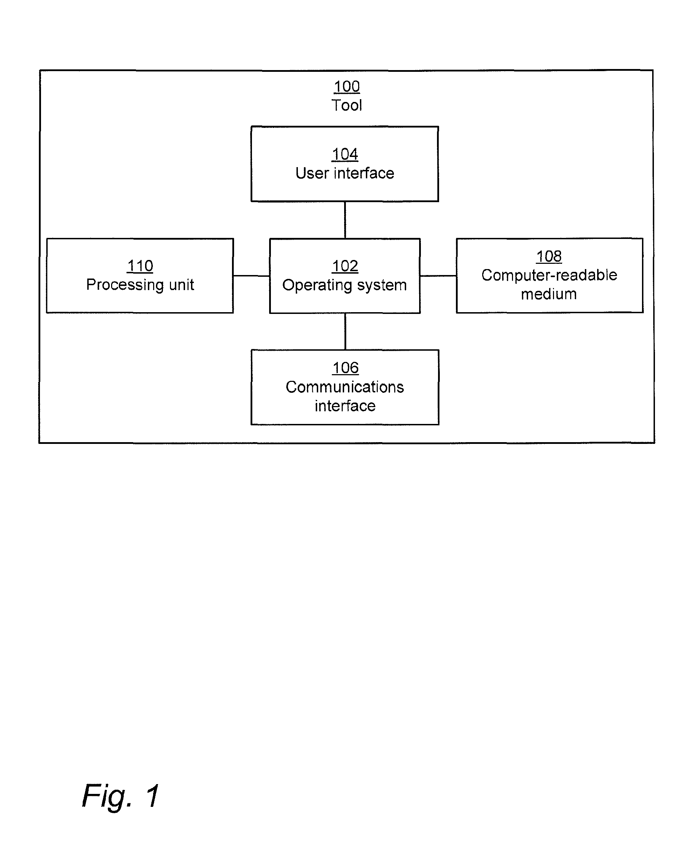

The below disclosed subject matter may be provided as a computer program product. The computer program product comprises software instructions that, when executed in a computer, performs the disclosed subject matter. The computer program product may be stored on a non-transitory computer-readable medium. The below disclosed subject matter may also be provided as a tool in an object-oriented programming environment for defining an object type therein. Fig. 1 discloses a tool 100. As such the tool may have certain means to enable certain functions to be performed. The tool 100 is run under the supervision of an operating system 102. The operating system 102 is operatively connected to a user interface 104. The user interface 104 is arranged to receive input from a user and to deliver output to the user. The operating system 102 is further operatively connected to a communications interface 106. By means of the communications interface 106 the tool 100 may communicate with other entities in a building automation system (not shown). Computer program instructions may be stored in the computer readable medium 108, which may be a non-transitory storage medium. The computer readable medium 108 may store computer program instructions that causes the processing unit 110 to perform a number of functionalities related inter alia to defining an object in an object-oriented programming environment. Thus the tool 100 may comprise circuitry configured to implement methods as disclosed below. The functionality of this tool will be further disclosed below.

*Aggregate object:* In general, an aggregation is an association between two or more objects that results in a whole/part relationship. An object comprising other objects (i.e. the whole object) is referred to as an aggregate object. Objects used to build the whole object are called part objects.

Aggregate objects are built from one or more part objects. An aggregate object can be a simple aggregate, a composite aggregate, or a combination of both. The difference between simple and aggregation is how the whole or aggregate object is linked to its part objects. The type of linking between an aggregate and its parts may dictate the lifetime (creation and deletion) of its part objects. The difference between simple and aggregation is dictated by who (i.e. what object) controls the lifetime of the aggregate's part objects.

If the aggregate object exclusively uses its part objects and otherwise has no control over their creation, modification, or deletion, then the relationship between the aggregate and its parts is a simple aggregation. The part object can exist (i.e. it can be created, modified and deleted) independently of the simple aggregate object. This means that a part object may participate, perhaps simultaneously, in more than one simple aggregation relationship. A garbage collector may eventually delete unreferenced objects, but as long as the simple aggregate object maintains a reference to its part object, the part object will maintain in the memory. References to existing part objects can be passed to aggregate object constructions or other aggregate object methods by program design.

If the aggregate object instead controls the lifetime of its part objects (i.e. it creates, modifies and deletes them) this is called a composite aggregate. Composite aggregates may have complete control over the existence of their part objects. This may also mean that a composite aggregate's part objects do not come into existence until the aggregate object is created. Composite aggregate part objects are created when the aggregate object is created. Aggregate part creation usually takes place in the aggregate object constructor. In for example C# there is no direct way for a programmer to destroy a part object. As noted above a garbage collector may eventually delete unreferenced objects. Therefore, during its lifetime the aggregate object may have to guard against violating data encapsulation by not returning a reference to its part objects.

Thus an object is an aggregate if it contains and uses the services of other objects. An aggregate object consists of itself (the whole) and the objects it contains (its parts). An aggregate object is dependent upon the behaviour of its part objects. Complex aggregates may comprise many different types of part objects, each providing specialized behaviour. This may require careful consideration of polymorphic behaviour to uniformly treat these different part types, see "C# For Artists, the Art and Science of Object-Oriented Programming," by Rick Miller, Pulp Free Press, 2008.

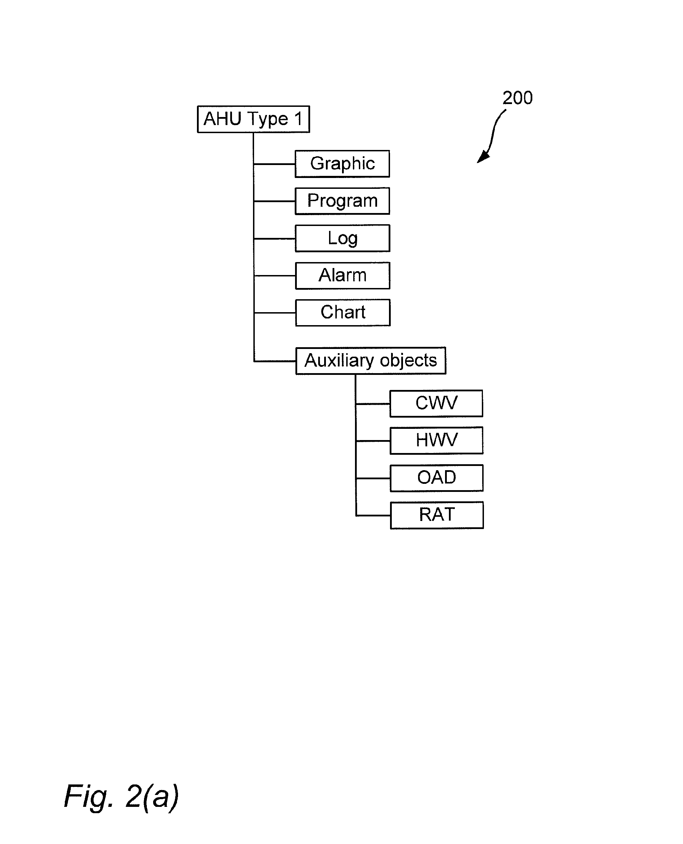

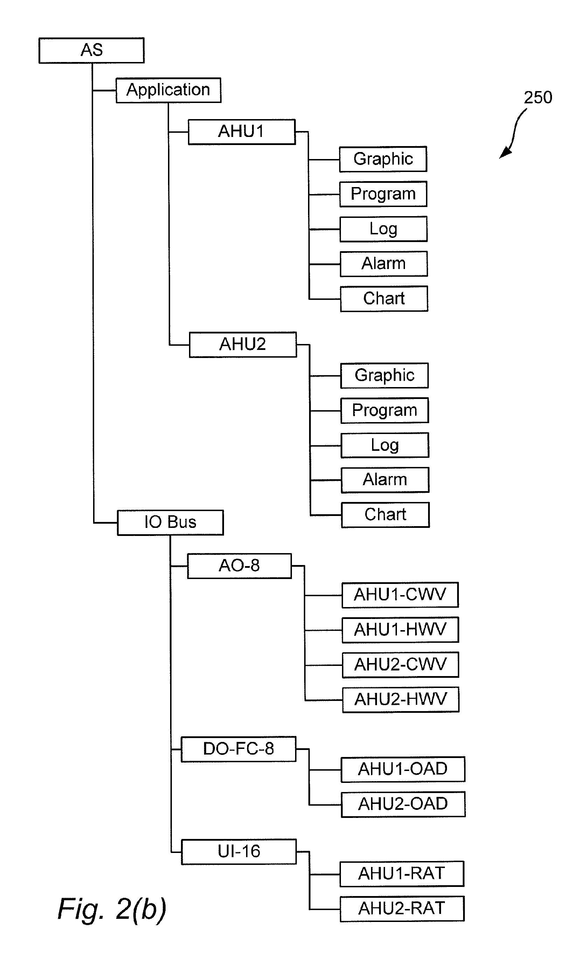

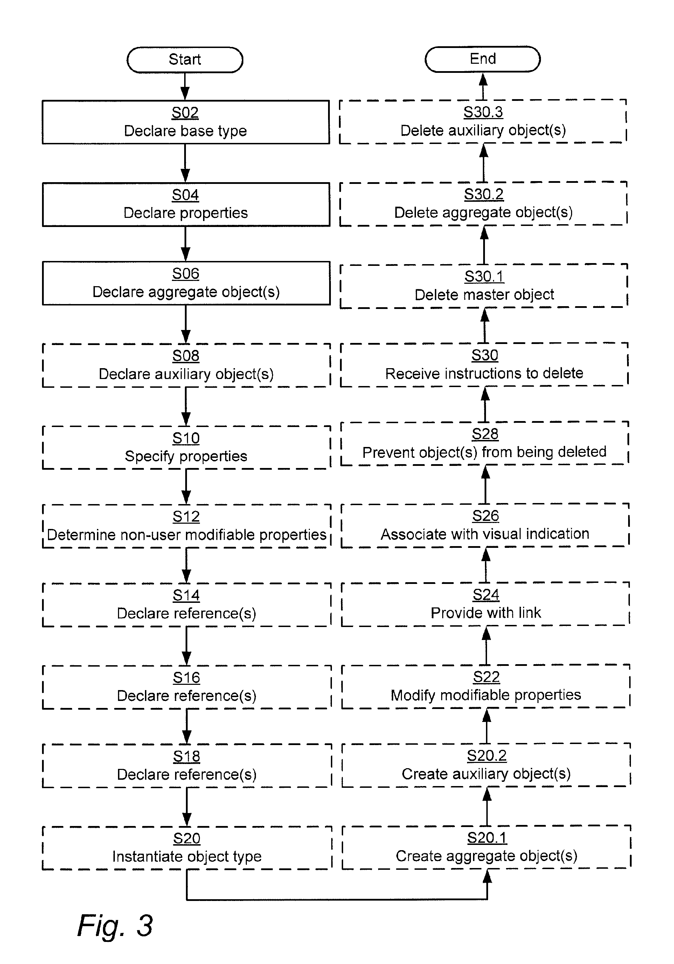

*Declaration of objects:* A method for defining an object type will now be described with reference to the tool of Fig. 1, the object-oriented environments of Figs. 2(a) and (b) and the flowchart of Fig. 3. In a building automation system an object type defines an object to be, e.g. an alarm, a trend log, a schedule, a folder or an analogue value. Objects are created from object types.

The herein disclosed object type is defined in an object-oriented programming environment. The herein disclosed object-oriented programming environment has a hierarchical object structure.

The method comprises declaring a base type for the object type, step S02. Fig. 2(a) is a schematic illustrations of an object structure 200 in an object-oriented environment. In Fig. 2(a) the object type is denoted "AHU Type 1 ". Thus the disclosed tool has means for declaring a base type for the object type. The object type inherit properties from the base type. The object type inheritance may be used to declare common properties fur multiple object types. It may also be used to organize objects of similar types below a common ancestor. Thus there may preferably be a hierarchy of object types. In the below example an object has a three-level hierarchy, starting at the level of the object itself:
● Object
   o Trend log
      ■ Interval Trend Log
      ■ Change of Value Trend Log
      ■ ...
   o Alarm
      ■ Out of Range Alarm
      ■ Change of State Alarm
      ■ ...
   o Value
      ■ Analogue Value
      ■ Digital Value
      ■ Multistate Value
      ■ String Value
      ■ ...
   o ...

The method further comprises declaring properties for the object type, step S04. Thus the disclosed tool has means for declaring properties for the object type. Such declared properties will be further disclosed next.

*Specification of properties:* A property may be either a parameter or a variable. Parameters are generally used to configure the object. An example of a parameter for an object of the type "Alarm" could *inter alia* be the parameter "Alarm Limit". Variables are generally used to represent the runtime state of the object. An example of a variable for an object of the type "Alarm" could *inter alia* be the variable "Alarm State". A property generally has a data type and a number of attributes. Examples of attributes may be the attribute "read-only", the attribute "retain level", and the attribute "initial value".

The method further comprises declaring a set of aggregated objects, step S06. The set of aggregated objects comprises individual objects of different types which are associated with the object type. In the example of Fig. 2(a) the aggregated objects are "Graphic", "Program", "Log", "Alarm", and "Chart".

The set of aggregated objects is to be instantiated in a master object created from the object type, see below. Thus the disclosed tool has means for declaring a set of aggregated objects comprising individual objects of different types associated with the object type, wherein the set of aggregated objects is to be instantiated in a master object created from the object type.

The method further comprises declaring a set of auxiliary objects, step S08. The set of auxiliary objects comprises individual objects of different types which are associated with the object type. In the example of Fig. 2(a) the auxiliary objects of the declared object type "AHU Type 1" are "CWV", "HWV", "OAD", and "RAD". The individual objects of the set of auxiliary objects are to be instantiated in respective locations in the hierarchical object structure, see below. Thus the disclosed tool has means for declaring a set of auxiliary objects comprising individual objects of different types and associated with the object type, wherein the individual objects of the set of auxiliary objects are to be instantiated in respective locations in the hierarchical object structure.

The method may thus further comprise specifying property values of the auxiliary objects in the object type, step S10. In the object type, it may be determined which of the properties of the auxiliary objects that are not modifiable by a user, step S12. For example, a property denoted as "read only" cannot be made "non-read only".

References: References may be used to specify relations between objects, e.g. which values in the building automation system that shall be shown in a graphic, the inputs and outputs of program, which value that shall be logged by a trend log or monitored by an alarm. References may be declared between the object type and the set of aggregated objects. Thus, in a step S14 at least one reference between the object type and the set of aggregated objects may be declared. Further, references may be declared between the object type and the set of set of auxiliary objects, step S16. References can also be declared between aggregated objects and auxiliary objects in any combination. Thus, in a step S18 at least one reference between the set of aggregated objects and the set of auxiliary objects may be declared.

The declared at least one reference may be maintained independently of in which location the set of aggregated objects and/or the set of auxiliary objects is/are instantiated. Similarly, the declared at least one reference may be maintained independently of whether or not the set of aggregated objects and/or the set of auxiliary objects is/are moved.

*Instantiation of the object type:* Instantiation of the object type results in creation and storage of auxiliary objects. Fig. 2(b) is a schematic illustration of an object structure 250 in an object-oriented environment. Fig. 2(b) illustrates two created objects "AHU1" and "AHU2" comprised in the "Application" of the structure "AS" and created from the object type "AHU Type 1" of Fig. 2(a). When an object is created using the object type the object is created in a location. The aggregated objects are instantiated in the object created from the object type. The auxiliary objects can be instantiated anywhere in the system where it is allowed to create objects of their spcific type. It could be inside the master object if that is allowed by the master object. In the example of Fig. 2(b) the auxiliary objects of the objects "AHU1" and "AHU2" are instantiated under the locations "AO-8", "DO-FC-8" and "UI-16", respectively of the "IO Bus". Location "AO-8" comprises auxiliary objects "AHU1-CWV" and "AHU1-HWV" associated with the object "AHU1" and auxiliary objects "AHU2-CWV" and "AHU2-HWV" associated with the object "AHU2", Similarly location "DO-FC-8" comprises auxiliary object "AHU1-OAD" associated with the object "AHU1" and auxiliary object "AHU2-OAD" associated with the object "AHU2", Likewise location "UI-16" comprises auxiliary object "AHU1-RAT" associated with the object "AHU1" and auxiliary object "AHU2-RAT" associated with the object "AHU2".

As illustrated in Fig. 2(b) the objects AHU1 have the same aggregated objects as the object type "AHU Type 1", i.e. "Graphic", "Program", "Log", "Alarm", and "Chart". Thus, in the present illustrative example there are references from the "Graphic", "Program", "Log", "Alarm" and "Chart" to the auxiliary objects which in the illustrative example are lO points which can only be created below an lO module in the lO Bus. There may also be references from the Graphic", to the "Program", "Log", "Alarm" and/or "Chart".

The method may thus further comprise instantiating the object type, step S20. The master object is thereby created in a first location in the hierarchical object structure. A location in a hierarchical object structure may in some embodiments correspond to a folder in a hierarchical file system. In response to the instantiating the object type the set of aggregated objects may be created inside the master object, step S20.1. Further in response to the instantiating the object type the set of auxiliary objects may be created, step S20.2, and in response thereto the individual objects of the set of auxiliary objects may be saved in the respective locations. The respective locations in the hierarchical object structure correspond to the type of the individual objects of the set of auxiliary objects. Thus, when an object type with auxiliary objects is instantiated the auxiliary objects are also created and the user may be allowed, by means of the user interface 104, to specify the locations of the auxiliary objects. However, some types of objects can only be instantiated in certain locations in the system and this also applies to auxiliary objects. Said certain locations in the system are preferably separated from the first location in which the master object is created.

*Modification of properties:* Modification may only be possible for some properties. The user can only modify the properties of the auxiliary objects that have been specified as modifiable. Thus, in response to user input received for example by means of the user interface 104 and relating to a modifiable property, the modifiable property may be modified, step S22. However, if user input prompts a property which is not modifiable by a user this property is not modified and the user may be provided with information that the property is not modifiable. This information may be provided as an information message displayed in the engineering tool, for example by means of the user interface 104.

*Links:* A link may be regarded as a reference. Links may be used to enable navigation from the objects to the base type. Thus, one or more of the objects in the set of auxiliary objects may be provided with such a link to the base type declaring the set of auxiliary objects, step S24. In an engineering environment the links may be identifiable and selectable. Thus a user may (visually) identify a link and then select the link (for example by clicking on the link) to access the base type of the set of auxiliary objects.

*Visual indication:* There may be different ways to distinguish auxiliary objects from other objects. A visual indicator may enable a user to easily identify auxiliary objects in the engineering environment. For example, in a step S26 objects in the set of auxiliary objects may be associated with a visual indication that indicates that the objects are auxiliary objects. Further, the indication may indicate the master object associated with the auxiliary objects, thereby enabling the user to identify the master object associated with a particular auxiliary object.

*Deletion:* In the disclosed object-oriented programming environment auxiliary objects cannot be individually and/or separately deleted. Nor can the set of auxiliary objects be independently deleted. Thus the created set of auxiliary objects is prevented from being deleted, step S28, unless its master object is deleted. As a consequence of this, the user (i.e. the engineer using the provided object oriented programming tool in the building automation system) cannot delete an auxiliary object. However, when a master object being associated with auxiliary objects is deleted, all its auxiliary objects will also be automatically deleted.

Thus when user input pertaining to deletion of the master object is received, step S30, a number of actions is performed in response thereto. The user input firstly triggers deletion of the master object, step S30.1. Secondly, since the master object is deleted the associated set of aggregated objects is also deleted, step S30.2. Thirdly, also because the master object is deleted the associated set of auxiliary objects is deleted, step S30.3. Hence, deletion of the master object triggers all associated aggregated objects and all associated auxiliary objects to be automatically deleted.

Similarly, the bindings from the auxiliary objects to the aggregate cannot be individually and/or separately deleted. Hence the bindings are kept until the master object is deleted. This only applies if the bindings are specified as non-modifiable.

It will be appreciated that a person skilled in the art can modify the above-described embodiments in many ways and still use the advantages of the invention as shown in the embodiments above. Thus, the invention should not be limited to the shown embodiments but should only be defined by the appended claims.

## Claims

1. A method for defining an object type in an object-oriented programming environment having a hierarchical object structure, the method comprising:
- declaring a base type for said object type;
- declaring properties for said object type;
- declaring a set of aggregated objects comprising individual objects of different types associated with said object type, wherein said set of aggregated objects is to be instantiated in a master object created from said object type; and
- declaring a set of auxiliary objects comprising individual objects of different types and associated with said object type, wherein said individual objects of said set of auxiliary objects are to be instantiated in respective locations in said hierarchical object structure.

2. The method according to claim 1, further comprising:
- instantiating said object type, thereby creating said master object in a first location in said hierarchical object structure, and in response to said instantiating
o creating said set of aggregated objects inside said master object;
o creating said set of auxiliary objects; and
o saving said individual objects of said set of auxiliary objects in said respective locations.

3. The method according to claim 1, further comprising:
- specifying, based on said object type, properties of said auxiliary objects; and
- determining, based on said object type, which of said properties of said auxiliary objects that are user modifiable and which of said properties of said auxiliary objects that are not user modifiable.

4. The method according to claim 3, further comprising
- in response to user input relating to a modifiable property, modifying said modifiable property.

5. The method according to claim 2, further comprising:
- preventing said created set of auxiliary objects from being deleted unless said master object is deleted.

6. The method according to claim 2, further comprising:
- receiving user input pertaining to deletion of said master object, and in response thereto
o deleting said master object;
o deleting said set of aggregated objects; and
o deleting said set of auxiliary objects.

7. The method according to claim 1, further comprising:
- declaring at least one reference between said object type and said set of aggregated objects.

8. The method according to claim 1, further comprising:
- declaring at least one reference between said object type and said set of auxiliary objects.

9. The method according to claim 1, further comprising:
- declaring at least one reference between said set of aggregated objects and said set of auxiliary objects.

10. The method according to any one of claims 7-9, further comprising:
- maintaining said declared at least one reference independently of in which location said set of aggregated objects and/or said set of auxiliary objects is/are instantiated.

11. The method according to any one of claims 7-9, further comprising:
- maintaining said declared at least one reference independently of whether or not said set of aggregated objects and/or said set of auxiliary objects is/are moved.

12. The method according to claim 1, further comprising:
- providing each object in said set of auxiliary objects with a link to said base type enabling navigation from said each object to said base type declaring said set of auxiliary objects.

13. The method according to claim 1, further comprising:
- associating each object in said set of auxiliary objects with a visual indication indicating that said each object is an auxiliary object.

14. A tool in an object-oriented programming environment having a hierarchical object structure for defining an object type therein, comprising circuitry configured to implement a method according to any one of claims 1-13.

15. A computer program product stored on a non-transitory computer-readable medium, which comprises software instructions that, when executed in a computer, performs a method according to any one of claims 1-13.

## Amended claims

### Amended claims in accordance with Rule 137(2) EPC.

**1.** A method for defining an object type in an object-oriented programming environment having a hierarchical object structure (200, 250), the method comprising:
- declaring (S02) a base type for said object type;
- declaring (S04) properties for said object type;
- declaring (S06) a set of aggregated objects comprising individual objects of different types associated with said object type, wherein said set of aggregated objects is to be instantiated in a master object created from said object type; **characterized by**
- declaring (S08) a set of auxiliary objects comprising individual objects of different types and associated with said object type; and
- instantiating (S20) said object type, thereby creating said master object in a first location in said hierarchical object structure, and in response to said instantiating
o creating (S20.1) said set of aggregated objects inside said master object;
o creating (S20.2) said set of auxiliary objects;
o instantiating individual objects of said set of auxiliary objects in respective locations in said hierarchical object structure; and
o saving said individual objects of said set of auxiliary objects in said respective locations.

**2.** The method according to claim 1, further comprising:
- specifying (S10), based on said object type, properties of said auxiliary objects; and
- determining (S12), based on said object type, which of said properties of said auxiliary objects that are user modifiable and which of said properties of said auxiliary objects that are not user modifiable.

**3.** The method according to claim 2, further comprising
- in response to user input relating to a modifiable property, modifying (S22) said modifiable property.

**4.** The method according to claim 1, further comprising:
- preventing (S28) said created set of auxiliary objects from being deleted unless said master object is deleted.

**5.** The method according to claim 1, further comprising:
- receiving (S30) user input pertaining to deletion of said master object, and in response thereto
○ deleting (S30.1) said master object;
○ deleting (S30.2) said set of aggregated objects; and
○ deleting (S30.3) said set of auxiliary objects.

**6.** The method according to claim 1, further comprising:
- declaring (S14) at least one reference between said object type and said set of aggregated objects.

**7.** The method according to claim 1, further comprising:
- declaring (S16) at least one reference between said object type and said set of auxiliary objects.

**8.** The method according to claim 1, further comprising:
- declaring (S18) at least one reference between said set of aggregated objects and said set of auxiliary objects.

**9.** The method according to any one of claims 6-8, further comprising:
- maintaining said declared at least one reference independently of in which location said set of aggregated objects and/or said set of auxiliary objects is/are instantiated.

**10.** The method according to any one of claims 6-8, further comprising:
- maintaining said declared at least one reference independently of whether or not said set of aggregated objects and/or said set of auxiliary objects is/are moved.

**11.** The method according to claim 1, further comprising:
- providing (S24) each object in said set of auxiliary objects with a link to said base type enabling navigation from said each object to said base type declaring said set of auxiliary objects.

**12.** The method according to claim 1, further comprising:
- associating (S26) each object in said set of auxiliary objects with a visual indication indicating that said each object is an auxiliary object.

**13.** A tool (100) in an object-oriented programming environment having a hierarchical object structure (200, 250) for defining an object type therein, comprising circuitry configured to implement a method according to any one of claims 1-12.

**14.** A computer program product stored on a non-transitory computer-readable medium (108), which comprises software instructions that, when executed in a computer, performs a method according to any one of claims 1-12.
